# EUROPEAN PATENT APPLICATION

(11) **EP 2 937 133 A1**
(43) Date of publication of application: **28.10.2015**
(21) Application number: 14165868.2
(22) Date of filing: 24.04.2014
(51) Int. Cl.: B01D 53/66, A23B 7/152, F25D 17/04, F25D 11/00

(54) **A reefer container for transporting and storing a plurality of produce**

(71) Applicant: Kjærulf Pedersen A/S, 2630 Taastrup (DK)
(72) Inventor: Ehrhorn, Kristian, 5260 Odense S (DK)
(74) Representative: Hoffmann Dragsted A/S

(57) **Abstract**

The present invention relates to a reefer container for transporting and storing a plurality of produce at a predetermined temperature, the produce generating ethylene and other organic compounds during transport and storage, said reefer container comprising a substantially closed room having an atmosphere, a cooling device for maintaining the room at the predetermined temperature, and an atmosphere-controlling system for controlling the atmosphere in the room of the reefer container, the atmosphere-controlling system comprising a system inlet (161) and a system outlet (162), a flow direction of an airstream being defined between the system inlet and the system outlet, a fan (160) arranged at the system outlet, an ethylene reduction unit (100) for reducing a content of ethylene of the atmosphere in the room, a catalyst unit (150) arranged downstream the ethylene reduction unit, the catalyst unit being adapted to reduce a content of ozone generated during the reduction of ethylene, the catalyst unit having a catalyst inlet (153), a catalyst outlet (154) and a catalyst midsection (155) arranged substantially between the catalyst inlet and catalyst outlet, and a control unit (200), wherein a first measuring point (103) is arranged upstream the catalyst inlet and a second measuring point (151) is arranged at the catalyst midsection, the first measuring point and the second measuring point being connected with at least a first ozone sensor (170) so that via the first measuring point a first ozone concentration of the air before the air enters the catalyst unit can be measured, and via the second measuring point a second ozone concentration of the air present in the catalyst midsection of the catalyst unit can be measured, the first ozone sensor being connected with the control unit, and wherein the first ozone concentration is compared to the second ozone concentration in the control unit in order to calculate the expected ozone concentration of the air downstream the catalyst unit. Further, the present invention relates to a method for measuring an ozone concentration in an airstream in a reefer container according to the present invention.

## Description

### Field of the invention

The present invention relates to a reefer container for transporting and storing a plurality of produce at a predetermined temperature. Further, the present invention relates to a method for measuring an ozone concentration in an airstream in a reefer container according to the present invention.

### Background art

Ethylene can build up in reefer containers during transport of ethylene-producing fruits and vegetables, i.e. produce, during transport and storage in the reefer containers. This ethylene accelerates the ripening effect on the perishable cargo in an undesirable manner.

To avoid this effect, the ethylene must be depleted. This can be done by exposing the ethylene-contaminated air to ozone, which oxidises the organic and other airborne organic material in the air. However, the cargo must not be exposed directly to the ozone, as the cargo may be damaged by such exposure. The ozone is then to be reduced which is normally done by means of a catalyst.

Ozone is extremely dangerous to humans in concentrations down to 10 ppb. It is therefore important that the efficiency of the catalyst is maintained at all time during operation at a sufficiently high level.

In known solutions, this can be controlled by measuring the ozone concentration downstream the catalyst, e.g. the concentration at the exit of the catalyst should be below a safety threshold. If the concentration exceeds this safety level, the system should be turned off or otherwise tuned to a safe exit concentration.

However, the environment in which the measuring equipment for measuring ozone concentration must function is harsh, as the temperature in reefers may vary from -40 up to +65 degrees Celsius and the humidity may be high and condensing. The cargo transported in the reefer may be any type of goods which may contribute to contamination of the reefer atmosphere, which may be harmful to the measurement equipment.

### Summary of the invention

It is an object of the present invention to wholly or partly overcome the above disadvantages and drawbacks of the prior art. More specifically, it is an object to provide an improved reefer container having an atmosphere-controlling system wherein the measurement of the ozone concentration is facilitated.

The above objects, together with numerous other objects, advantages and features, which will become evident from the below description, are accomplished by a solution in accordance with the present invention by a reefer container for transporting and storing a plurality of produce at a predetermined temperature, the produce generating ethylene and other organic compounds during transport and storage, said reefer container comprising
- a substantially closed room having an atmosphere,
- a cooling device for maintaining the room at the predetermined temperature, and
- an atmosphere-controlling system for controlling the atmosphere in the room of the reefer container, the atmosphere-controlling system comprising
- a system inlet and a system outlet, a flow direction of an airstream being defined between the system inlet and the system outlet,
- a fan arranged at the system outlet,
- an ethylene reduction unit for reducing a content of ethylene of the atmosphere in the room,
- a catalyst unit arranged downstream the ethylene reduction unit, the catalyst unit being adapted to reduce a content of ozone generated during the reduction of ethylene, the catalyst unit having a catalyst inlet, a catalyst outlet and a catalyst midsection arranged substantially between the catalyst inlet and catalyst outlet, and
- a control unit,
wherein a first measuring point is arranged upstream the catalyst inlet and a second measuring point is arranged at the catalyst midsection, the first measuring point and the second measuring point being connected with at least a first ozone sensor so that via the first measuring point a first ozone concentration of the air before the air enters the catalyst unit can be measured, and via the second measuring point a second ozone concentration of the air present in the catalyst midsection of the catalyst unit can be measured, the first ozone sensor being connected with the control unit, and
wherein the first ozone concentration is compared to the second ozone concentration in the control unit in order to calculate the expected ozone concentration of the air downstream the catalyst unit.

The first measuring point may be fluidly connected with a first pipe having a first pipe inlet and a first pipe outlet, and the second measuring point may be fluidly connected with a second pipe having a second pipe inlet and a second pipe outlet.

Moreover, a three-way valve may be arranged so that the first pipe outlet is connected with a first valve inlet of the three-way valve and the second pipe outlet is connected with a second valve inlet of the three-way valve, and the first ozone sensor may be connected with an valve outlet of the three-way valve.

Also, the control unit may be connected with the three-way valve via a solenoid, the solenoid being adapted to activate the three-way valve so that the first valve inlet can be brought into fluid communication with the valve outlet and the second valve inlet can be brought into fluid communication with the valve outlet, respectively.

Furthermore, the first ozone sensor may be connected with the first measuring point, and a second ozone sensor may be connected with the second measuring point for measuring the second ozone concentration, the first ozone sensor and the second ozone sensor both being connected with the control unit.

Additionally, the first ozone sensor may be arranged at the first pipe outlet and the second ozone sensor may be arranged at the second pipe outlet.

The first measuring point and the second measuring point may be adapted to take out gas samples of the airstream.

Moreover, the second ozone concentration may be less than 1/30 of the first ozone concentration.

Also, the first ozone sensor and/or the second ozone sensor may be adapted to measure a level of ozone concentration higher than 1 ppmv.

Further, the ozone sensor may be based on optical absorption of UV light at 255 nm, in which the ozone absorbs the energy from the UV light.

In addition, the ethylene reduction unit may comprise an ultra violet (UVC) lamp adapted to radiate the airstream with ultra violet (UVC) light so that ozone is generated from oxygen molecules present in the airstream, whereby the ozone depletes the ethylene and/or other organic compounds in the ethylene reduction unit.

The catalyst unit may comprise MnO₂ and CuO for depleting the ozone to oxygen.

Also, the fan may be connected with the control unit.

In the reefer container according to the present invention, a pressure sensor may be connected with the first pipe and/or the second pipe, the pressure sensor being arranged between the pipe inlets and the pipe outlets, the pressure sensor being connected with the control unit.

Moreover, the catalyst unit may comprise a temperature sensor, the temperature sensor being connected with the control unit.

Furthermore, the ethylene reduction unit may comprise a heating element adapted to heat the airstream in the ethylene reduction unit, the heating element being connected with the control unit.

Additionally, the system may comprise a humidity sensor, the humidity sensor being connected with the control unit.

The present invention also relates to a method for measuring an ozone concentration in an airstream in a reefer container as described above, the method comprising the steps of:
- reducing a content of ethylene of the atmosphere in the room of the reefer container by means of ozone,
- reducing a content of ozone in a catalyst unit having a catalyst inlet, a catalyst outlet and a catalyst midsection arranged substantially between the catalyst inlet and catalyst outlet,
- measuring a first ozone concentration at a first measuring point arranged upstream the catalyst inlet,
- measuring a second ozone concentration at a second measuring point arranged at the catalyst midsection, and
- comparing the first ozone concentration with the second ozone concentration in a control unit in order to calculate the expected ozone concentration of the airstream downstream the catalyst unit.

### Brief description of the drawings

The invention and its many advantages will be described in more detail below with reference to the accompanying schematic drawings, which for the purpose of illustration show some non-limiting embodiments and in which
Fig. 1 shows a reefer container in a top view with a view into the substantially closed room,
Fig. 2 shows schematically an embodiment of an atmosphere-controlling system, and
Fig. 3 shows schematically another embodiment of the atmosphere-controlling system.

All the figures are highly schematic and not necessarily to scale, and they show only those parts which are necessary in order to elucidate the invention, other parts being omitted or merely suggested.

### Detailed description of the invention

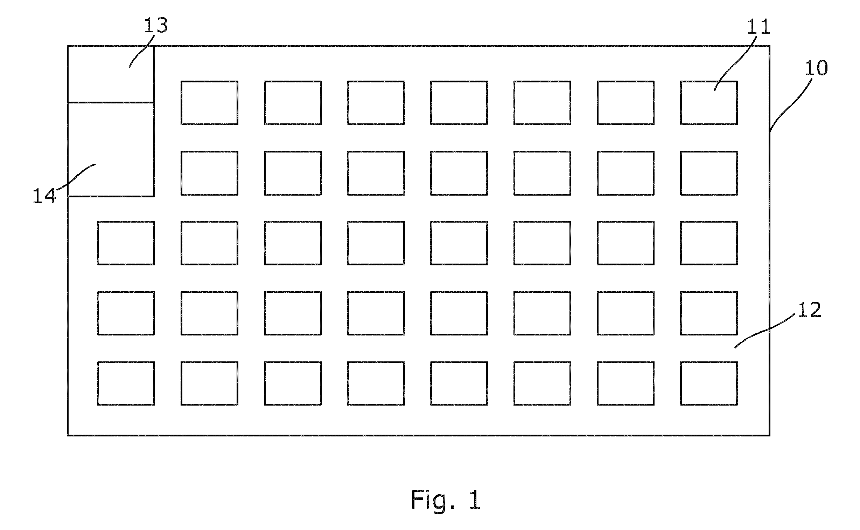

Fig. 1 shows schematically a reefer container 10 according to invention. The reefer container is adapted to transport and store a plurality of produce 11, such as fruit and vegetables. The produce 11 may generate ethylene and other organic compounds during the transport and storage, and said ethylene and other organic compounds are desirable to deplete since the ethylene present in the reefer container accelerates the ripening effect on the perishable cargo.

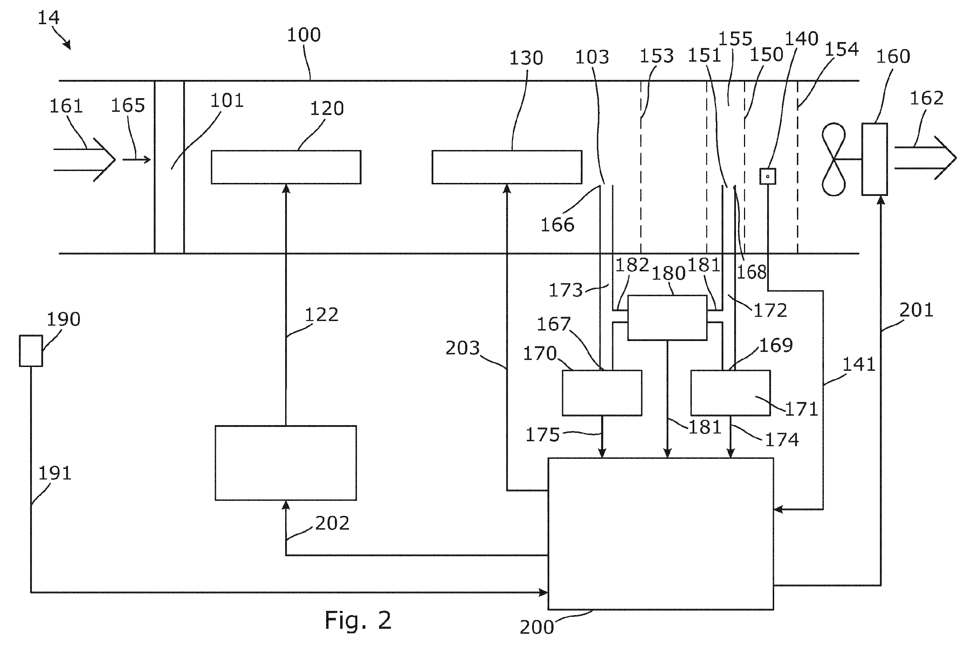

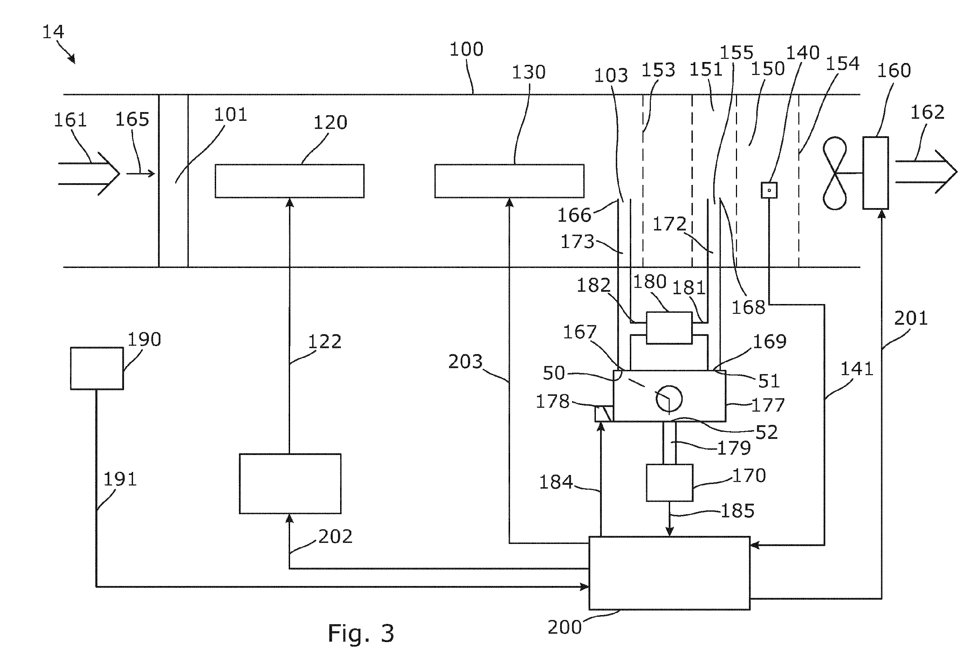

The reefer container 10 comprises a substantially closed room 12 and a cooling device 13 for maintaining the room 12 and thereby the produce at a predetermined temperature during transport. According to the inventive idea, the reefer container 10 also comprises an atmosphere-controlling system 14 for controlling the atmosphere in the room 12. The atmosphere-controlling system 14 will be described further below in connection with Figs. 2 and 3.

Fig. 2 shows an embodiment of the atmosphere-controlling system 14. The atmosphere-controlling system 14 comprises a system inlet 161 and a system outlet 162, a flow direction 165 of an airstream being defined between the system inlet and the system outlet. Furthermore, a fan 160 or ventilator is arranged at the system outlet 162 for controlling a flow rate of the airstream.

The atmosphere-controlling system 14 also comprises an ethylene reduction unit 100 for reducing a content of ethylene of the atmosphere in the room. The different components of the ethylene reduction unit 100 will be described further below. In addition, a catalyst unit 150 is arranged downstream the ethylene reduction unit 100, the catalyst unit 150 being adapted to reduce a content of ozone generated during the reduction of ethylene, the catalyst unit 150 having a catalyst inlet 153, a catalyst outlet 154 and a catalyst midsection 155 arranged substantially between the catalyst inlet 153 and catalyst outlet 154. The atmosphere-controlling system 14 furthermore comprises a control unit 200, such as a CPU.

According to the invention, a first measuring point 103 is arranged upstream the catalyst inlet 153 and a second measuring point 151 is arranged at the catalyst midsection 155. In this embodiment, the first measuring point 103 is fluidly connected with a first pipe 173 having a first pipe inlet 166 and a first pipe outlet 167, and the second measuring point 151 is fluidly connected with a second pipe 172 having a second pipe inlet 168 and a second pipe outlet 169. A first ozone sensor 170 is arranged at the first pipe outlet 167 and a second ozone sensor 171 is arranged at the second pipe outlet 169. Thus, in this embodiment, the first ozone sensor 170 is connected with the first measuring point 103 via the first pipe 173, whereby the first ozone sensor can measure a first ozone concentration of the air before the air enters the catalyst unit 150, and the second ozone sensor 171 is connected with the second measuring point 151 via the second pipe 172 so that the second ozone sensor 171 can measure a second ozone concentration of the air present in the catalyst midsection 155 of the catalyst unit 150. When the first ozone sensor 170 has measured the first ozone concentration, it sends a signal 175 to the control unit 200, and when the second ozone sensor 171 has measured the second ozone concentration, it also sends a signal 174 to the control unit 200.

In the control unit 200, the first ozone concentration is compared to the second ozone concentration in order to calculate the expected ozone concentration of the air downstream the catalyst unit 150.

By measuring the ozone concentration of the airstream from the ethylene reduction unit 100 upstream the catalyst unit 150, where the ozone concentration is several order of magnitude higher than downstream the catalyst unit, and by providing another ozone concentration measurement of the air at the midsection 155 in the catalyst unit 150, it is possible to compare the upstream ozone concentration with the midsection concentration and thereby calculate and establish the efficiency of the catalyst unit. As the efficiency of the catalyst unit 150 is calculated as a ratio between the upstream ozone concentration and midsection ozone concentration of the airstream, there is no demand on the actual accuracy or precision of the ozone sensor used, presuming that the same sensor is used to measure both the upstream ozone concentration and the midsection ozone concentration.

The ozone concentration downstream the catalyst unit is very low and thereby very difficult to measure properly, unless a very sensitive and precise ozone sensor is used, which is very expensive. However, since the ozone concentration upstream the catalyst unit and the ozone concentration at the midsection of the catalyst unit are considerably higher than the ozone concentration downstream the catalyst unit, these concentrations are easier to measure without the use of high precision measurement equipment. Hereby a huge cost saving in relation to the ozone sensors used in the atmosphere-controlling system according to the present invention is obtained.

According to the invention, the first ozone sensor 170 and/or the second ozone sensor 171 are adapted to measure a level of ozone concentration higher than 1 ppmv.

Furthermore, the ozone sensor may be based on optical absorption of UV light at 255 nm, in which the ozone absorbs the energy from the UV light. The UV light may be an UV LED and the detector may be an UV sensitive photodiode. The ozone sensor is preferably a cuvette with ozone-containing air, through which the light is led through. The relationship between the light amount at zero ozone and x%v of oxygen is provided by Beer-Lambert law, meaning that the highest signal is obtained at zero concentration and that the signal decreases exponentially at higher concentrations.

The cuvette is preferably protected against contaminating particles by a particle filter provided at the inlet to the cuvette. The particle filter may for instance be made of porous Polytetrafluoroethylene (PTFE).

This type of ozone sensor is more robust than known electrochemical ozone sensors or heated metal oxide semiconductor ozone sensors.

By measuring upstream the catalyst unit, the ozone concentration may be between 10-100 ppmv, typically around 30ppmv, and the ozone concentration at the midsection of the catalyst unit is normally less than 1ppmv.

In another (not shown) embodiment, the first ozone sensor may be connected with the first measuring point, and a second ozone sensor may be connected with the second measuring point for measuring the second ozone concentration. Thus, the first measuring point may be coinciding with the first ozone sensor and the second measuring point may be coinciding with the second ozone sensor, respectively.

Advantageously, the first measuring point and the second measuring point are adapted to take out gas samples of the airstream, so that the ozone sensor connected with the measuring point is able to measure the ozone content and thereby the ozone concentration of the gas sample.

Preferably, the second ozone concentration may be less than 1/30 or preferably 1/100 of the first ozone concentration.

The ethylene reduction unit 100 may comprise an ultra violet (UVC) lamp 120 adapted to radiate the airstream with ultra violet (UVC) light so that ozone is generated from oxygen molecules present in the airstream, whereby the ozone depletes the ethylene and/or other organic compounds in the ethylene reduction unit 100. The air from the room is led into the ethylene reduction unit 100 via the system inlet 161 and is passed through an input dust filter 101. As mentioned above, the ozone is generated from the oxygen molecules in the airstream by radiation of UVC light from the UVC lamp 120. In the ethylene reduction unit 100, which has an airflow, the relatively high ozone concentration, up to a WT% of 1, depletes the ethylene and other organic compounds present in the airstream. Since the air leaving the ethylene reduction unit 100 then contains elevated ozone concentrations, it may be reduced to a predetermined and acceptable level. Accordingly, the air is fed through the catalyst unit 150 so that the catalyst unit 150 depletes the ozone to oxygen before the air via the fan 160 is returned to the room of the reefer container. The catalyst unit 150 may comprise MnO₂ and CuO for depleting the ozone to oxygen.

Furthermore, it is possible to use a robust UV absorption measuring system in a very cost-saving manner compared to a high precision UV absorption sensor normally used to measure the very low ozone concentrations found downstream the catalyst unit.

As mentioned above, the ozone is generated by radiation of the air oxygen with UV light. The ozone generation will be proportional to the oxygen concentration in the air which may vary from about 2 to 21%. This means that by measuring the upstream ozone concentration, the oxygen concentration may be calculated (the ozone concentration is proportional with the oxygen concentration, whereby the ozone concentration measurement before the catalyst unit is a linear function of the oxygen concentration). This may make another oxygen sensor, used for regulating the oxygen concentration in the room of the reefer container, redundant.

There are also other parameters which influence the ozone concentration in the air, such as flow rate of the air, temperature, UV effect at 185nm and oxygen concentration in the air entering the system inlet.

Thus, the fan 160 may be connected with the control unit 200 so that the control unit 200 may adjust the flow or speed of the fan 160 by means of the signal 201 in view of the measured ozone concentrations. Accordingly, the airflow generated by the fan 160 may be controlled in order to trim and optimise the catalyst unit 150, e.g. if the catalyst unit 150 is overloaded, the airflow can be reduced in order to reduce the ozone load, or if the oxygen concentration is low, the ozone concentration will also be low, which would allow the airflow to be increased.

Furthermore, a pressure sensor 180 may be connected with the first pipe 173 via pipe part 182 and/or the second pipe 172 via pipe part 181, the pressure sensor 180 being arranged between the pipe inlets 166, 168 and the pipe outlets 167, 169, the pressure sensor 180 being connected with the control unit 200 and sending signal 181 to the control unit. The pressure sensor 180 determines the airflow by the differential pressure between the air pressure upstream the catalyst unit 150 and the air pressure at the midsection of the catalyst unit 150. In addition, the catalyst unit 150 may comprise a temperature sensor 140, the temperature sensor 140 being connected with the control unit 200 via 141. The temperature in the catalyst unit 150 is measured in order to ensure that the catalyst unit 150 has a suitable working temperature at around 30 degrees Celsius. This may be controlled by regulating the effect supplied to the heating element 130 or the UVC lamp 120.

Also, the ethylene reduction unit 100 may comprise a heating element 130 adapted to heat the airstream in the ethylene reduction unit 100, the heating element 130 also being connected with the control unit 200 via 203 so that the control unit 200 can control the temperature of the heating element in view of the measured catalyst temperature.

The system 14 may also comprise a humidity sensor 190, the humidity sensor 190 being connected with the control unit 200 via 191.

The ozone concentration upstream the catalyst unit is also dependent of the UV power from the UV lamp 120. Thus, the control unit 200 may also control the power of the UV lamp 120 via the signals 202, 122.

In Fig. 3, another embodiment of the atmosphere-controlling system 14 is shown. The system 14 in Fig. 3 comprises substantially the same components as the embodiment described in connection with Fig. 2 and will therefore not be described again in relation to Fig. 3. However, for the purposes of facilitating understanding, the reference numbers to the different components have been kept on Fig. 3 even though the components in question are not explicitly described here.

In this embodiment, the first measuring point 103 is also arranged upstream the catalyst inlet 153 and the second measuring point 151 is arranged at the catalyst midsection 155. The first measuring point 103 and the second measuring point 151 are connected with a first ozone sensor 170 so that via the first measuring point 103 a first ozone concentration of the air before the air enters the catalyst unit 150 can be measured, and via the second measuring point 151 a second ozone concentration of the air present in the catalyst midsection 155 of the catalyst unit 150 can be measured, the first ozone sensor 170 being connected with the control unit 200 via 170. In the same manner as described in connection with Fig. 2, the first ozone concentration is compared to the second ozone concentration in the control unit 200 in order to calculate the expected ozone concentration of the air downstream the catalyst unit 150. Thus, in this embodiment, only a single ozone sensor is used for measuring the first ozone concentration and the second concentration.

In order to make this possible, a three-way valve 177 is arranged so that the first pipe outlet 167 is connected with a first valve inlet 50 of the three-way valve 177 and the second pipe outlet 169 is connected with a second valve inlet 51 of the three-way valve 177. In addition, the first ozone sensor 170 is connected with a valve outlet 52 of the three-way valve 177 via the pipe part 185. The control unit 200 is connected with the three-way valve 177 via a solenoid 178. The solenoid 178 is adapted to activate the three-way valve 177 so that the first valve inlet 50 can be brought into fluid communication with the valve outlet 52 and the second valve inlet 51 can be brought into fluid communication with the valve outlet 52, respectively. This causes the control unit 200 to be able to control whether it is at the first measuring point 103 or at the second measuring point 151 that ozone concentration is to be measured.

Although the invention has been described in the above in connection with preferred embodiments of the invention, it will be evident for a person skilled in the art that several modifications are conceivable without departing from the invention as defined by the following claims.

## Claims

**1.** A reefer container (10) for transporting and storing a plurality of produce (11) at a predetermined temperature, the produce generating ethylene and other organic compounds during transport and storage, said reefer container comprising
- a substantially closed room (12) having an atmosphere,
- a cooling device (13) for maintaining the room at the predetermined temperature, and
- an atmosphere-controlling system (14) for controlling the atmosphere in the room of the reefer container, the atmosphere-controlling system comprising
- a system inlet (161) and a system outlet (162), a flow direction (165) of an airstream being defined between the system inlet and the system outlet,
- a fan (160) arranged at the system outlet,
- an ethylene reduction unit (100) for reducing a content of ethylene of the atmosphere in the room,
- a catalyst unit (150) arranged downstream the ethylene reduction unit, the catalyst unit being adapted to reduce a content of ozone generated during the reduction of ethylene, the catalyst unit having a catalyst inlet (153), a catalyst outlet (154) and a catalyst midsection (155) arranged substantially between the catalyst inlet and catalyst outlet, and
- a control unit (200),
wherein a first measuring point (103) is arranged upstream the catalyst inlet and a second measuring point (151) is arranged at the catalyst midsection, the first measuring point and the second measuring point being connected with at least a first ozone sensor (170) so that via the first measuring point a first ozone concentration of the air before the air enters the catalyst unit can be measured, and via the second measuring point a second ozone concentration of the air present in the catalyst midsection of the catalyst unit can be measured, the first ozone sensor being connected with the control unit, and
wherein the first ozone concentration is compared to the second ozone concentration in the control unit (200) in order to calculate the expected ozone concentration of the air downstream the catalyst unit.

**2.** A reefer container according to claim 1, wherein the first measuring point is fluidly connected with a first pipe (173) having a first pipe inlet (166) and a first pipe outlet (167), and the second measuring point is fluidly connected with a second pipe (172) having a second pipe inlet (168) and a second pipe outlet (169).

**3.** A reefer container according to claim 2, wherein a three-way valve (177) is arranged so that the first pipe outlet is connected with a first valve inlet (50) of the three-way valve and the second pipe outlet is connected with a second valve inlet (51) of the three-way valve, and wherein the first ozone sensor is connected with an valve outlet (52) of the three-way valve.

**4.** A reefer container according to claim 3, wherein the control unit is connected with the three-way valve via a solenoid (178), the solenoid being adapted to activate the three-way valve so that the first valve inlet can be brought into fluid communication with the valve outlet and the second valve inlet can be brought into fluid communication with the valve outlet, respectively.

**5.** A reefer container according to claim 1, wherein the first ozone sensor (170) is connected with the first measuring point (103), and a second ozone sensor (171) is connected with the second measuring point (151) for measuring the second ozone concentration, the first ozone sensor and the second ozone sensor both being connected with the control unit.

**6.** A reefer container according to claims 2 and 5, wherein the first ozone sensor (170) is arranged at the first pipe outlet (167) and the second ozone sensor (171) is arranged at the second pipe outlet (169).

**7.** A reefer container according to claim 1, wherein the second ozone concentration is less than 1/30 of the first ozone concentration.

**8.** A reefer container according to any of the preceding claims, wherein the first ozone sensor (170) and/or the second ozone sensor (171) are/is adapted to measure a level of ozone concentration higher than 1 ppmv.

**10.** A reefer container according to claim 1, wherein the ethylene reduction unit comprises an ultra violet (UVC) lamp (120) adapted to radiate the airstream with ultra violet (UVC) light so that ozone is generated from oxygen molecules present in the airstream, whereby the ozone depletes the ethylene and/or other organic compounds in the ethylene reduction unit.

**11.** A reefer container according to claim 1, wherein the catalyst unit (150) comprises MnO₂ and CuO for depleting the ozone to oxygen.

**12.** A reefer container according to claim 2, wherein a pressure sensor (180) is connected with the first pipe and/or the second pipe, the pressure sensor being arranged between the pipe inlets and the pipe outlets, the pressure sensor being connected with the control unit (200).

**13.** A reefer container according to claim 1, wherein the ethylene reduction unit comprises a heating element (130) adapted to heat the airstream in the ethylene reduction unit, the heating element being connected with the control unit (200).

**14.** A reefer container according to claim 1, wherein the system (14) comprises a humidity sensor (190), the humidity sensor being connected with the control unit (200).

**15.** A method for measuring an ozone concentration in an airstream in a reefer container (10) according to any of the preceding claims, the method comprising the steps of:
- reducing a content of ethylene of the atmosphere in the room (12) of the reefer container by means of ozone,
- reducing a content of ozone in a catalyst unit (150) having a catalyst inlet (153), a catalyst outlet (154) and a catalyst midsection (155) arranged substantially between the catalyst inlet and catalyst outlet,
- measuring a first ozone concentration at a first measuring point (103) arranged upstream the catalyst inlet,
- measuring a second ozone concentration at a second measuring point (151) arranged at the catalyst midsection, and
- comparing the first ozone concentration with the second ozone concentration in a control unit (200) in order to calculate the expected ozone concentration of the airstream downstream the catalyst unit.
